# EUROPÄISCHE PATENTSCHRIFT

(11) **EP 1 728 729 B1**
(45) Veröffentlichungstag und Bekanntmachung des Hinweises auf die Patenterteilung: **17.03.2010**
(21) Anmeldenummer: 06114505.8
(22) Anmeldetag: 24.05.2006
(51) Int. Cl.: B65D 61/00, B65D 85/20

(54) **Verfahren zum Transport von Rundholz oder Schnittholz**
Procedure to transport round timber or sawn timber
Procédure pour transporter des troncs d'arbre ou du bois coupé

(30) Priorität: 01.06.2005 AT 9412005
(43) Veröffentlichungstag der Anmeldung: 06.12.2006
(73) Patentinhaber: Wanek-Pusset, Peter, 6805 Kapfenberg (AT); Grentner, Bernhard, 8614 Breitenau (AT)
(72) Erfinder: Wanek-Pusset, Peter, 6805 Kapfenberg (AT); Grentner, Bernhard, 8614 Breitenau (AT)
(74) Vertreter: Vinazzer, Edith

(56) Entgegenhaltungen:
- DE-A1- 19 849 665
- DE-U1- 9 416 042

## Beschreibung

Die Erfindung betrifft ein Verfahren gemäß dem Oberbegriff des Anspruchs 1.

Für den Transport von Rund- oder Schnittholz im kombinierten Verkehr - auf Straßen auf LKWs und im Eisenbahngüterverkehr auf Waggons - ist es üblich, Container zu verwenden. Container haben ein hohes Eigengewicht, ihre Manipulation beim Be- und Entladen ist mit einem erheblichen Aufwand verbunden. Container sind daher für den Einsatz im kombinierten Verkehr unwirtschaftlich.

Die gattungsbildende DE-A-198 49 665 betrifft einen Frachtbehälter für eine lose Fracht von Baumstämmen mit einem Ladebett und einer Reihe von in Längsrichtung beabstandeten seitlichen Rückhaltemitteln in Form von aufrechten Pfosten oder Stützen, die zwischen Eckpfosten angeordnet sind, welche ihrerseits an oder nahe den Enden des Ladebetts angeordnet sind. Das Ladebett ist eine im Wesentlichen offene Rahmenkonstruktion und beinhaltet ein Paar von beabstandeten längsgerichteten Deckträgern, die sich zwischen oder etwas neben entsprechenden Eckpfosten erstrecken. Die Baumstämme werden von einer offenen Rahmenkonstruktion aus querverlaufenden Deckträgern aufgenommen, welche zwischen den längsgerichteten Deckträgern verlaufen. Über der Ladung kann zwischen den oberen Enden von gegenüberliegenden Rückhaltemitteln ein flexibles Spannseil oder -kabel befestigt werden oder es kann der gesamte Umfang der Ladung mit einem Spannseil oder -kabel umgeben werden. Diese Spannhalterungen sind nur zeitweilige Rückhaltemaßnahmen und die Rückhaltemittel werden in seitlich sich gegenüberliegenden Paaren gruppiert und durch stabile, dazwischenliegende Querträger zu einer integralen, versteiften, einheitlichen U-Rahmen-Konstruktion verbunden. Ein Gabelstapler wird lediglich dazu eingesetzt, einzelne Baumstämme oder Gruppen von Baumstämmen auf die längsgerichteten Chassis-Träger zu heben. In den Seitenwänden der längsgerichteten Chassis-Träger sind Schlitze zum Einführen von Gabelstapler-Zinken eingebracht, um eine Handhabung und ein Stapeln der Behälter im unbeladenen und zusammengefalteten Zustand zu ermöglichen. Dieser Druckschrift lässt sich daher eine stabile, versteifte und somit entsprechend schwere Konstruktion eines Frachtbehälters entnehmen.

Der Erfindung liegt die Aufgabe zu Grunde, ein Verfahren zum Umschlagen von Rund- oder Schnittholz zur Verfügung zu stellen, welches vor Allem im kombinierten Verkehr wirtschaftlich einsetzbar ist, und welches problemlos und mit geringem Aufwand gehandhabt werden kann.

Gelöst wird die gestellte Aufgabe erfindungsgemäß durch die Merkmale des Anspruchs 1.

Das erfindungsgemäße Verfahren sieht daher vor, dass zum Umschlagen der beladenen Palette das Holz unmittelbar erfasst bzw. angehoben wird. Die Ausführung der Palette mit einem Rahmen und Rungen weist ein wesentlich geringeres Gewicht auf als die herkömmlichen Container. Dies wird vor allem dadurch erreicht, dass die eigentliche Tragefunktion der beladenen Palette das Rund- oder Schnittholz übernimmt und der Rahmen der Palette nur der Formstabilität dient. Dadurch ist es möglich, die Palette mit Rund- oder Schnittholz komplett zu beladen, auch wenn sich diese auf keinem Fahrzeug befindet. Durch die vorgesehene Transfermöglichkeit der Palette mittels eines Staplerfahrzeuges oder dergleichen lassen sich beladene Paletten problemlos vom LKW auf einen Eisenbahnwaggon und umgekehrt transferieren.

Das gemäß einer bevorzugten Ausführung vorgesehene, gleichermaßen für LKWs und Eisenbahnwaggons passende Verschlusssystem mit am Rahmen angeordneten Verschlusseinrichtungen, gewährleistet einen problemlosen Wechsel vom Straßentransport auf den Eisenbahntransport und umgekehrt.

Auch die Anordnung der Verschlusseinrichtungen am Rahmen ist denkbar einfach, diese können an den Ladeschwellen paarweise angeordnet werden. Die Verschlusseinrichtungen sind dabei bevorzugt Schnellverschlüsse, insbesondere an sich bekannte Twist-Locks, die sich auf einfache und problemlose Weise bedienen lassen.

Der gegenseitige Abstand der Schnellverschlüsse wird an den gegenseitigen Abstand der Längsträger von LKWs und Containertragwaggons angepasst, sodass die Befestigung der Vorrichtung an diesen Fahrzeugen problemlos möglich ist.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Schrägansicht einer Ausführungsform einer erfindungsgemäßen Palette zum Beladen mit Rund- oder Schnittholz,
Fig. 2 die Palette aus Fig. 1 im mit Rundholz beladenen Zustand (derselbe Zustand ergibt sich auch bei Beladung mit Schnittholz),
Fig. 3 bis Fig. 5 zeigen einzelne Schritte des Hantieren der Palette mit einem Staplerfahrzeug,
Fig. 6 und Fig. 7 das Beladen eines LKWs und
Fig. 8 und Fig. 9 analog zu Fig. 6 und Fig. 7 das Beladen eines Containertragwaggons,
Fig. 10 bis 13 die Verriegelung der Palette am LKW oder am Waggon und
Fig. 14 bis 18 die Manipulation der leeren Paletten.

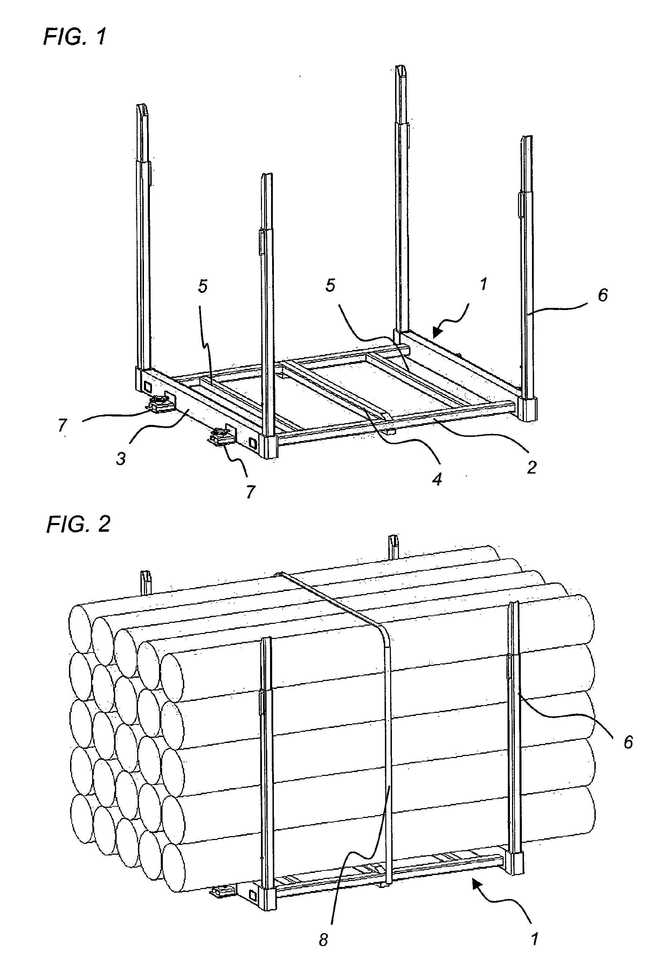

Die in Fig. 1 gezeigte Ausführung einer Palette weist einen rechteckigen Rahmen 1 auf, dessen Längsseiten von zwei Längsträgern 2 und dessen Querseiten von zwei Ladeschwellen 3 gebildet sind. Die Längsträger 2 und die Ladeschwellen 3 sind Stahlprofile, die miteinander verschweißt sind, wobei die Längsträger 2 tiefer angeordnet sind als die Ladeschwellen 3. Ein weiteres profiliertes Stahlprofil bildet eine Schwelle 4, die parallel zu den beiden Ladeschwellen 3 die Längsträger 2 mittig verbindet. Zwei Hilfsladeschwellen 5, die gleichzeitig auch als Gleitflächen für die Gabelzinken eines Staplers dienen, sind ebenfalls an den Längsträgern 2 angeschweißt.

An den Enden der beiden Längsträger 2 ist jeweils eine Runge 6 angeordnet. Die Rungen 6 können, wie dargestellt, mit einem rechteckigen Querschnitt versehene Hohlprofile aus Stahl sein. Fig. 1 und Fig. 2 zeigen die Rungen 6 in ihrer aufrechten Stellung, der Betriebsstellung. Die Rungen 6 können in bekannter Weise an den Längsträgern 2 mittels Drehbolzen, die nicht gesondert dargestellt sind, drehbar angeordnet sein und derart aus ihrer Betriebsstellung in eine waagrechte, parallel zu den Längsträgern 2 ausgerichtete Lage gedreht werden. Mittels eines in bekannter Weise ausführbaren Verriegelungsmechanismus kann jede Runge 6 in ihrer Betriebsstellung gehalten werden. Die Mechanismen für die klappbare Anordnung der Rungen 6 bzw. für ihre Fixierung in der Betriebsstellung und in der umgeklappten Stellung können gemäß der EP 1 462 346 A ausgeführt sein. Hier ist vorgesehen, dass die Rungen in der Betriebsstellung oberhalb ihrer Drehbolzen jeweils durch einen an ihnen längsverschiebbar angeordneten Rungenschuh, welche auf lösbare Weise am Längsträger fixierbar ist, allseitig abgestützt sind.

Alternativ dazu kann auch vorgesehen sein, steckbare Rungen zu verwenden, die beispielsweise in an den Längsträgern befestigte bzw. verschweißte Bügel eingesteckt werden und bei Bedarf durch Herausziehen wieder entfernt werden können. Auch die Verwendung von fix angeordneten, beispielsweise an die Längsträger geschweißten Rungen, ist denkbar.

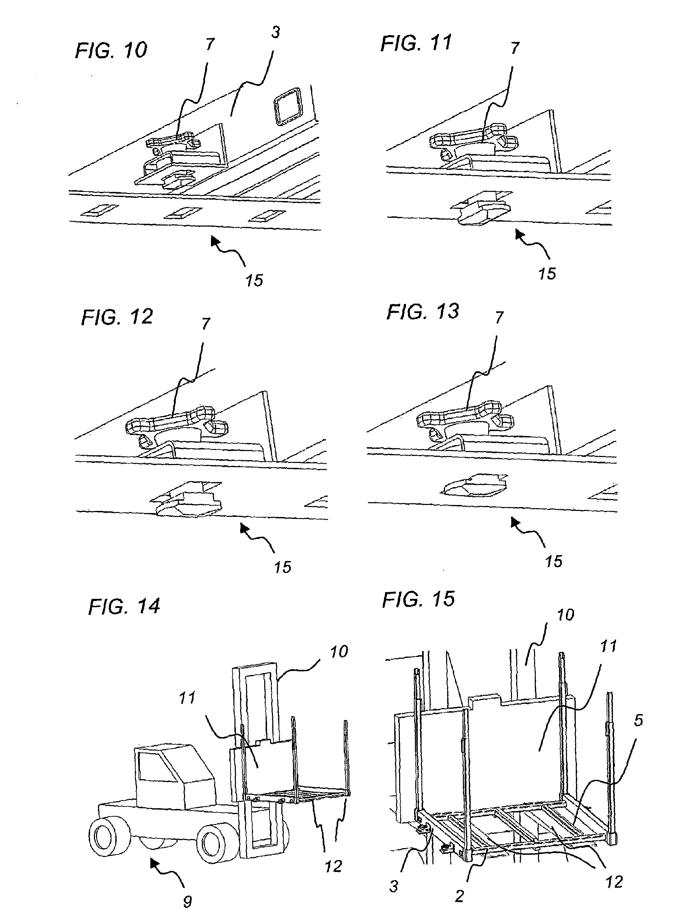

An den beiden Ladeschwellen 3 ist symmetrisch zur Längsachse des Rahmens 1 jeweils ein Paar von Schnellverschlüssen 7, insbesondere Twist-Locks, befestigt. Der gegenseitige Abstand der Schnellverschlüsse 7 ist an den gegenseitigen Abstand zweier paralleler Lochraster, welche an den Längsträgern des Transportfahrzeuges, etwa eines Sattelaufliegers oder eines andern LKW-Typs (Fig. 10) oder eines Containertragwaggons vorgesehen sind, angepasst. Die Aufnahmen für die Schnellverschlüsse 7 am LKW und am Waggon weisen gleiche gegenseitige Abstände auf, die Abstände in Längsrichtung werden derart gewählt, dass Paletten in unterschiedlichen Positionen aufgesetzt und verriegelt werden können.

Fig. 2 zeigt schematisch eine mit Rundhölzern beladene Palette. Ein Spanngurt 8 sichert die Rundhölzer und ist bevorzugt am Rahmen 1 der Palette befestigt.

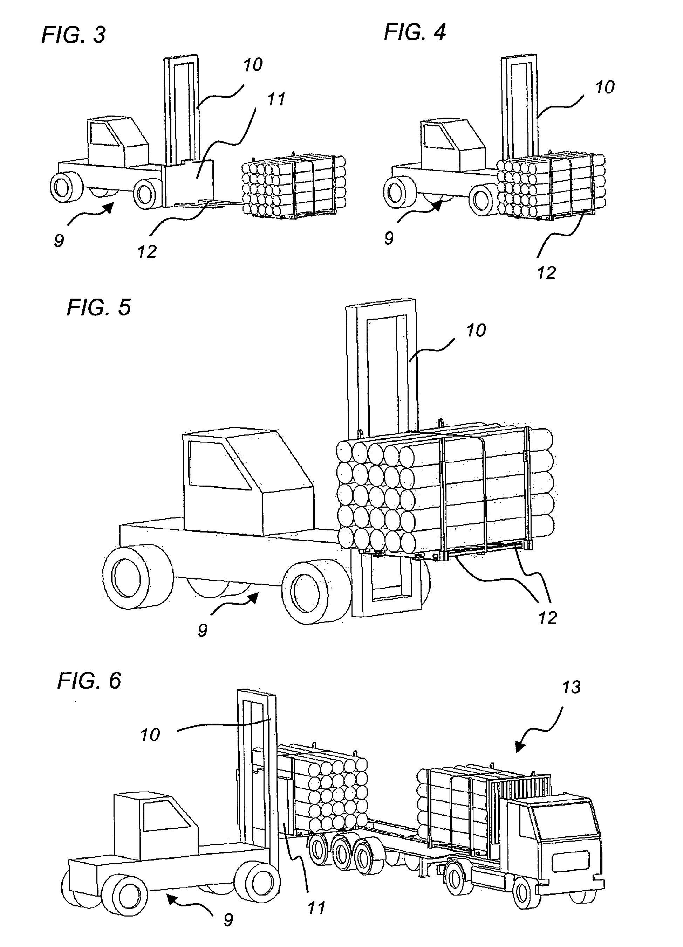

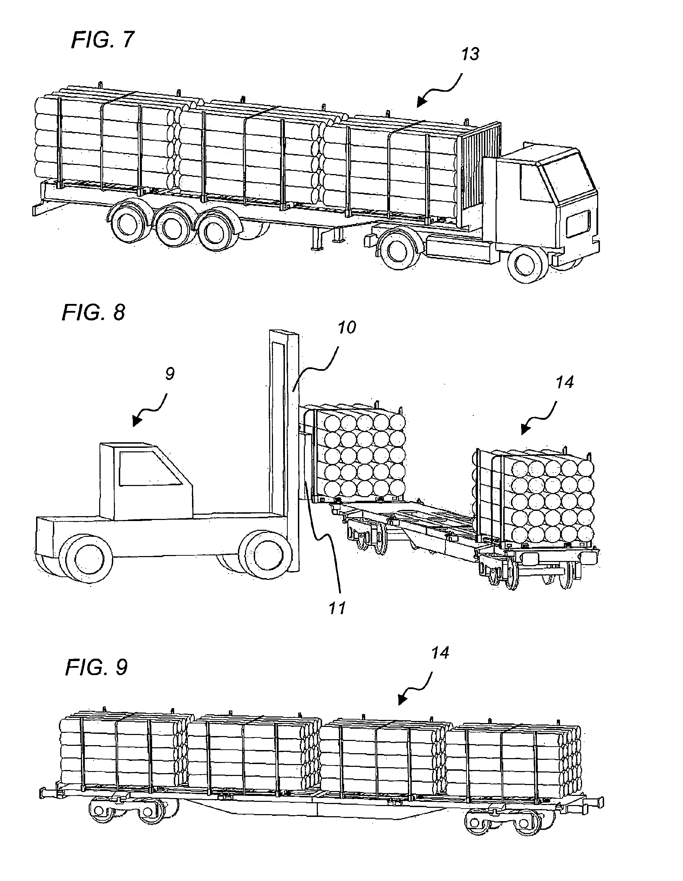

Der Transfer der beladenen Paletten zum Transportfahrzeug sowie das Be- und Entladen des Transportfahrzeuges erfolgt mittels eines Staplerfahrzeuges 9, wie es beispielsweise in Fig. 3 bis Fig. 6 und Fig. 8 dargestellt ist. Das Staplerfahrzeug 9 weist ein Hubgerüst 10 auf zum Anheben und Absenken eines Trägers 11 mit Gabelzinken 12. Wie insbesondere Fig. 3, Fig. 4 und Fig. 5 zeigen werden die Gabelzinken 12 zum Anheben der beladenen Palette unmittelbar unter das Rundholz eingeführt und die Palette wird angehoben. Fig. 6 versinnbildlicht den Transfer einer Palette zu einem LKW 13, auf welchem sich bereits eine beladene Palette befindet. Die Palette wird vom Gabelstaplerfahrzeug 11 auf dem LKW 13 positioniert, anschließend werden die Schnellverschlüsse verrastet. Fig. 7 zeigt einen komplett beladenen LKW 13.

Fig. 8 zeigt einen Containertragwaggon 14, auf welchem bereits eine beladene Palette abgesetzt und verriegelt worden ist, während des Beladens mit einer zweiten Palette. In Fig. 9 ist beispielhaft ein komplett beladener Containertragwaggon 14, welcher vier beladene Paletten trägt, dargestellt.

Fig. 10 bis 13 zeigen die Verriegelung der Palette am Waggon oder am LKW. Diese dargestellten Twist-Lock-Elemente 7 sind grundsätzlich bei LKWs für den Transport von Containern oder Wechselaufbauten bekannt, sind jedoch in diesen Fällen immer fahrzeugfest. Die bekannten Container oder Wechselaufbauten besitzen entsprechend genormte Öffnungen, in welche die Twist-Locks 7 einrasten. Im gegenständlichen Fall wurde die Anordnung umgekehrt. Die Twist-Locks 7 sind auf der Palette angeschweißt, der Fahrzeugrahmen 15 des LKWs oder des Waggons ist mit einem ein entsprechenden Lochmuster versehen.
Fig. 10 zeigt die Palette in angehobenem Zustand. In Fig. 11 ist die Palette auf den Fahrzeugrahmen 15 abgesenkt, der Twist-Lock 7 taucht in die Öffnung des Fahrzeugrahmens 15 ein.

In Fig. 12 ist der Twist-Lock 7 bereits um 90° gedreht, in Fig. 13 durch Drehen in Richtung Fahrzeugrahmen 15 gezogen. Dadurch ist die Palette fixiert.

In Fig. 14 und 15 ist der Transport einer leeren Palette mit einem Stapler 9 dargestellt, die Gabelzinken 12 befinden sich dabei unter den beiden Längsträgern 2 der Rundholzpalette. Die beiden Querträger 5 dienen als Gleithilfe für die Gabelzinken 12.

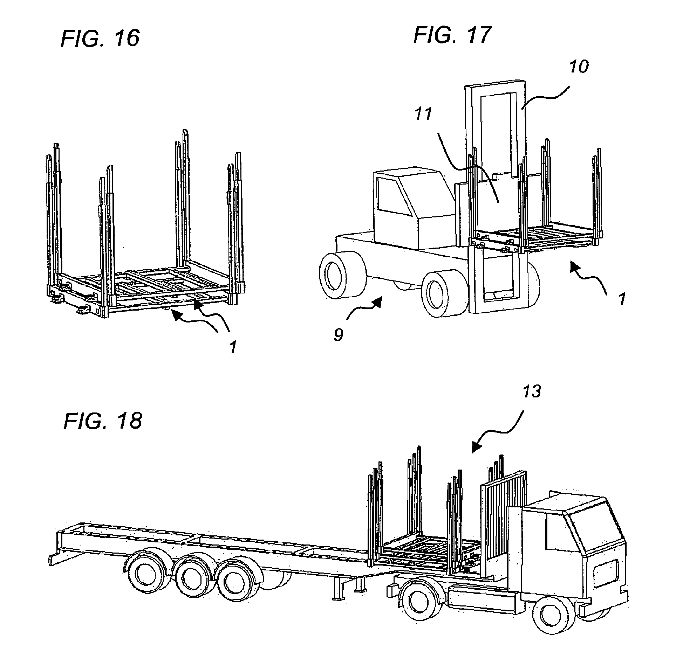

Fig. 16 zeigt zwei leere aufeinander gestapelte Paletten, Fig. 17 den Umschlag der gestapelten Paletten analog wie in Fig. 14 und 15 dargestellt.

Fig. 18 zeigt den Leertransport gestapelter Paletten auf dem LKW 13. Durch die Stapelung der leeren Paletten nehmen diese wenig Platz ein, sodass bei der Rückfahrt andere Güter geladen und damit Leerfahrten reduziert werden können. Auf analoge Weise kann auch der Leerbehältertransport am Waggon erfolgen.

Die Erfindung ist auf die dargestellten und beschriebenen Ausführungsformen nicht eingeschränkt. So ist es beispielsweise möglich, die Paletten auf eine andere als die dargestellte Weise am Transportfahrzeug zu befestigen. Die Paletten können ferner in unterschiedlichen Größen gefertigt werden.

## Patentansprüche

1. Verfahren zum Umschlagen einer mit Rund- oder Schnittholz beladenen Palette mittels eines Staplerfahrzeuges (9) oder dergleichen von oder auf LKWs und / oder Containertragwaggons, insbesondere zum Umschlagen der beladenen Palette im kombinierten Verkehr, welche Palette eine Rahmenkonstruktion (1) aus einem formstabilen rechteckigen Rahmen aufweist mit zwei Längsträgern (2) an den Längsseiten und zwei quer zu den Längsträgern angeordneten Ladeschwellen (3), auf welchen das Holz positioniert wird, und mit für die Beladung aufrecht stehenden Rungen (6) an den Eckbereichen, wobei im beladenen Zustand der Palette Holz lediglich auf zwei die Querseiten bildenden Ladeschwellen (3) aufliegt,
**dadurch gekennzeichnet,**
**dass** die Palette im beladenen Zustand über Spanneinrichtungen (9) am Holz befestigt wird und daß zum Anheben der beladenen Palette die Gabelzinken des Staplerfahrzeuges (9) zwischen den Längsträgern (2) und dem Holz positioniert werden, unmittelbar das Holz erfassen und gemeinsam mit der Palette anheben.

2. Verfahren nach Anspruch 1, **dadurch gekennzeichnet, dass** der Rahmen (1) mit Verschlusseinrichtungen (7) versehen wird, mittels welcher die Palette wahlweise auf LKWs (13) und auf Eisenbahnwaggons (14) lösbar befestigt wird.

3. Verfahren nach einem der Ansprüche 1 oder 2, **dadurch gekennzeichnet, dass** die Verschlusseinrichtungen an den Ladeschwellen (3) paarweise angeordnet werden.

4. Verfahren nach Anspruch 3, **dadurch gekennzeichnet, dass** die Verschlusseinrichtungen Schnellverschlüsse, insbesondere Twist-Locks (7), sind.

5. Verfahren nach Anspruch 3 oder 4, **dadurch gekennzeichnet, dass** der gegenseitige Abstand der Schnellverschlüsse (7) an den gegenseitigen Abstand der Längsträger von LKWs (13) und Containertragwaggons (14) angepasst wird.

## Claims

1. A method for the transhipment of a pallet loaded with round or cut timber by means of a stacking vehicle (9) or the like from or onto heavy goods vehicles and/or container-carrying wagons, more preferably for the transhipment of the loaded pallet in combined traffic, which pallet comprises a frame design (1) of a rectangular frame which is stable in shape with two longitudinal members (2) on the longitudinal sides and two loading sleepers (3) arranged transversely to the longitudinal members on which timber is positioned and with stanchions (6) in the corner regions positioned upright for the loading, wherein in the loaded state of the pallet timber merely rests on two loading sleepers (3) forming the transverse sides, **characterized in that** the pallet in the loaded state is fastened to the timber by means of clamping devices (9) and that for the lifting of the loaded pallet the fork tines of the stacking vehicle (9) are positioned between the longitudinal members (2) and the timber, directly pick up and lift the timber jointly with the pallet.

2. The method according to Claim 1, **characterized in that** the frame (1) is provided with closure devices (7) by means of which the pallet is releasable fastened optionally on heavy goods vehicles (13) and on railway wagons (14).

3. The method according to any one of the Claims 1 or 2, **characterized in that** the closure devices are arranged in pairs on the loading sleepers (3).

4. The method according to Claim 3, **characterized in that** the closure devices are quick closures, more preferably twist locks (7).

5. The method according to Claim 3 or 4, **characterized in that** the mutual spacing of the quick closures (7) is adapted to the mutual spacing of the longitudinal members of heavy goods vehicles (13) and container-carrying wagons (14).

## Revendications

1. Procédé pour le transbordement d'une palette chargée de bois ronds ou de bois débité au moyen d'un véhicule élévateur (9) ou similaires à partir de ou sur des camions et/ou des wagons porteurs de conteneurs, en particulier pour le transbordement de la palette chargée dans le transport combiné, laquelle palette présente une construction de base (1) comprenant un cadre rectangulaire indéformable avec deux longerons (2) sur les grands côtés et deux traverses (3) disposées transversalement aux longerons, sur lesquelles le bois est positionné, et dotées de ridelles (6) positionnées verticalement pour le chargement sur les zones d'angle, du bois reposant uniquement sur deux traverses (3) formant les côtés transversaux lorsque la palette est chargée,
**caractérisé en ce que** la palette est fixée dans l'état chargé au moyen de dispositifs de serrage (9) sur le bois et **en ce que**, pour le soulèvement de la palette chargée, les bras de fourche du véhicule élévateur (9) sont positionnés entre les longerons (2) et le bois, saisissent directement le bois et le soulèvent conjointement avec la palette.

2. Procédé selon la revendication 1, **caractérisé en ce que** le cadre (1) est doté de dispositifs de fermeture (7), au moyen desquels la palette est fixée de façon amovible au choix sur des camions (13) et sur des wagons de chemin de fer (14).

3. Procédé selon l'une quelconque des revendications 1 ou 2, **caractérisé en ce que** les dispositifs de fermeture sont disposés par paires sur les traverses (3).

4. Procédé selon la revendication 3, **caractérisé en ce que** les dispositifs de fermeture sont des fermetures rapides, en particulier des verrous tournants (7).

5. Procédé selon la revendication 3 ou 4, **caractérisé en ce que** l'espacement réciproque des fermetures rapides (7) est adapté à l'espacement réciproque des longerons des camions (13) et des wagons porteurs de conteneurs (14).
